# EUROPEAN PATENT APPLICATION

(11) **EP 4 831 934 A2**
(43) Date of publication of application: **28.10.2026**
(21) Application number: 26205012.3
(22) Date of filing: 15.09.2026
(51) Int. Cl.: G06V 10/764, G01N 21/94, G06V 20/52

(54) **METHOD AND APPARATUS FOR ANALYZING IMPACT PROPERTY OF CONTAMINANT, CLEANING METHOD, MEDIUM, AND DEVICE**

(30) Priority: 13.08.2026 SG 10202602821P
(71) Applicant: XG TECH PTE. LTD., Singapore 179098 (SG)
(72) Inventor: LIN, Wei, 179098 Singapore (SG); HUANG, Jingchang, 179098 Singapore (SG)
(74) Representative: v. Bezold & Partner Patentanwälte - PartG mbB

(57) **Abstract**

Embodiments of the present disclosure provide a method and an apparatus for analyzing an impact property of a contaminant, a cleaning method, a medium, and a device. The method includes: acquiring (100) target image information; determining (200), based on the target image information, a contaminant and a contaminated object in contact with the contaminant; determining (300) a first physical property of the contaminant, and determining a second physical property of the contaminated object; and determining (400) an impact property of the contaminant on the contaminated object based on the first physical property and the second physical property.

## Description

### TECHNICAL FIELD

The present disclosure relates to the technical field of smart homes, and in particular, to a method and an apparatus for analyzing an impact property of a contaminant, a cleaning method, a medium, and a device.

### BACKGROUND

In the field of intelligent cleaning, cleaning devices such as robotic vacuum cleaners typically have functions such as object recognition, obstacle detection, path planning, and automatic obstacle avoidance. For example, a robotic vacuum cleaner may perform object recognition through a camera, such as recognizing a toy, a shoe, cat feces, and the like, then clean up the cat feces based on a recognition result.

### SUMMARY

At present, a cleaning device can only recognize a type of an object, such as cat feces, but cannot further understand characteristics of the cat feces, and consequently, cannot perform targeted cleaning on the cat feces, resulting in incomplete cleaning or causing secondary contamination.

To resolve the above technical problem, embodiments of the present disclosure provide a method for analyzing an impact property of a contaminant, a cleaning method, an apparatus, a medium, and a device, which can separately determine physical properties of a contaminant and of a contact surface, and comprehensively analyze, in combination with the physical properties, a possible impact of the contaminant on the contact surface, thereby implementing targeted cleaning and improving a cleaning effect.

According to a first aspect of the present disclosure, there is provided a method for analyzing an impact property of a contaminant, the method including: acquiring target image information; determining, based on the target image information, a contaminant and a contaminated object in contact with the contaminant; determining a first physical property of the contaminant, and determining a second physical property of the contaminated object; and determining an impact property of the contaminant on the contaminated object based on the first physical property and the second physical property.

According to a second aspect of the present disclosure, there is provided a cleaning method, including: obtaining an impact property of a contaminant by using the method for analyzing an impact property of a contaminant according to the first aspect; determining a risk level of the contaminant by a pre-trained model based on the impact property, wherein the risk level includes a contamination diffusion risk level and/or a hazard risk level; and determining a cleaning strategy for the contaminant based on the risk level and the impact property, and performing a cleaning operation according to the cleaning strategy.

According to a third aspect of the present disclosure, there is provided an apparatus for analyzing an impact property of a contaminant, the apparatus including: an acquisition module, configured for acquiring target image information; a contamination detection module, configured for determining, based on the target image information, a contaminant and a contaminated object in contact with the contaminant; a physical property determination module, configured for determining a first physical property of the contaminant, and determining a second physical property of the contaminated object; and an impact property analysis module, configured for determining an impact property of the contaminant on the contaminated object based on the first physical property and the second physical property.

According to a fourth aspect of the present disclosure, embodiments of the present disclosure provide a computer readable storage medium, on which a computer program is stored, wherein the computer program is configured for performing the method for analyzing an impact property of a contaminant according to the first aspect.

According to a fifth aspect of the present disclosure, embodiments of the present disclosure provide a cleaning device, including: a processor; and a memory, configured for storing instructions executable by the processor, wherein the processor is configured for reading the executable instructions from the memory and executing the executable instructions to implement the method for analyzing an impact property of a contaminant according to the first aspect.

According to the technical solutions provided in the embodiments of the present disclosure, target image information is first acquired; and then, a contaminant and a contaminated object in contact with the contaminant are determined based on the target image information. A first physical property of the contaminant, such as hardness, viscosity, fluidity, or another physical characteristic of the contaminant, is determined; and a second physical property of the contaminated object, such as roughness, water absorbency, softness, or a physical characteristic of a contact surface, is acquired. On this basis, the first physical property and the second physical property are comprehensively analyzed to determine a possible impact of the contaminant on the contaminated object, for example, cat feces being crushed and smeared onto a floor during cleaning to form secondary contamination, or broken glass being embedded in carpet fibers causing cleaning difficulty or a potential safety hazard. Compared with prior cleaning devices that can only recognize a category of a target object, the present disclosure can not only recognize a category to which the contaminant belongs, but also analyze its interaction with the contaminated object, allowing for targeted adjustment of a cleaning strategy, thereby improving a cleaning effect and safety.

### BRIEF DESCRIPTION OF DRAWINGS

The foregoing and other objectives, features, and advantages of the present disclosure will become more apparent from the more detailed description of the embodiments of the present disclosure with reference to the accompanying drawings. The accompanying drawings are used for a further understanding of the embodiments of the present disclosure, constitute a part of this specification, are used together with the embodiments of the present disclosure to explain the present disclosure, and do not constitute a limitation to the present disclosure. In the accompanying drawings, same reference signs typically represent same components or steps.
FIG. 1 is a schematic diagram illustrating a system for analyzing an impact property of a contaminant according to an exemplary embodiment of the present disclosure.
FIG. 2 is a schematic flowchart illustrating a method for analyzing an impact property of a contaminant according to an exemplary embodiment of the present disclosure.
FIG. 3 is a schematic flowchart illustrating determining of a contaminant and a contaminated object according to an exemplary embodiment of the present disclosure.
FIG. 4 is a schematic flowchart illustrating determining of a physical property according to an exemplary embodiment of the present disclosure.
FIG. 5 is a schematic flowchart illustrating determining of a first physical property according to another exemplary embodiment of the present disclosure.
FIG. 6 is a schematic flowchart illustrating determining of a second physical property according to an exemplary embodiment of the present disclosure.
FIG. 7 is a schematic flowchart illustrating determining of an impact property according to another exemplary embodiment of the present disclosure.
FIG. 8 is a schematic flowchart illustrating a cleaning method according to an exemplary embodiment of the present disclosure.
FIG. 9 is a schematic diagram illustrating a structure of an apparatus for analyzing an impact property of a contaminant according to an exemplary embodiment of the present disclosure.
FIG. 10 is a diagram illustrating a structure of a cleaning device according to an exemplary embodiment of the present disclosure.

### DETAILED DESCRIPTION OF THE EMBODIMENTS

Exemplary embodiments of the present disclosure are described below in detail with reference to accompanying drawings. Obviously, the described embodiments are merely a part, rather than all, of embodiments of the present disclosure. It should be understood that the present disclosure is not limited by the exemplary embodiments described herein.

It should be noted that, unless otherwise specified, the scope of the present disclosure is not limited by relative arrangement, numeric expressions, and numerical values of components and steps described in these embodiments.

### Overview of Application

In the field of intelligent cleaning, cleaning devices such as robotic vacuum cleaners typically have functions such as obstacle detection, object recognition, path planning, and automatic obstacle avoidance. For example, a robotic vacuum cleaner may perform object recognition through a camera, such as recognizing a toy, a shoe, or cat feces, and then clean up the cat feces based on a recognition result.

In practical applications, a cleaning device may capture an image through a camera, recognize a target object from the image, and then determine a category to which the target object belongs. In this way, if it is determined that the target object is cat feces or the like, it may be determined that the target object belongs to a contaminant, and a cleaning operation may then be performed; otherwise, an obstacle avoidance operation is performed.

However, such a cleaning device can only recognize the target object and determine the category to which the target object belongs, but cannot further understand characteristics of the target object, and consequently, cannot perform targeted cleaning. For example, the cleaning device may determine that the target object is cat feces, but cannot further understand adhesion characteristic of the cat feces. If a conventional general-purpose cleaning approach is adopted, secondary contamination can be caused, resulting in a poor cleaning effect.

Therefore, there is an urgent need for a method capable of performing targeted cleaning of a contaminant to improve the cleaning effect.

The embodiments of the present disclosure propose a new solution, applied to the technical fields of smart homes and artificial intelligence, and capable of: acquiring target image information; determining, based on the target image information, a contaminant and a contaminated object in contact with the contaminant; determining a first physical property of the contaminant, and determining a second physical property of the contaminated object; and determining an impact property of the contaminant on the contaminated object based on the first physical property and the second physical property. According to the above method, after the target image information is acquired and the contaminant and the contaminated object are recognized based on the target image information, the first physical property of the contaminant, such as hardness, viscosity, fluidity, or another physical characteristic of the contaminant, is determined; and the second physical property of the contaminated object, such as roughness, water absorbency, softness, or a physical characteristic of a contact surface, is acquired. On this basis, the first physical property and the second physical property are comprehensively analyzed to determine a possible impact of the contaminant on the contaminated object, for example, cat feces being crushed and smeared onto a floor during cleaning to form secondary contamination, or broken glass being embedded in carpet fibers causing cleaning difficulty or a potential safety hazard. Compared with prior cleaning devices that can only recognize a category of a target object, the present disclosure can not only recognize a category to which the contaminant belongs, but also analyze its interaction with the contaminated object, allowing for targeted adjustment of a cleaning strategy, thereby improving a cleaning effect and safety.

### Exemplary System

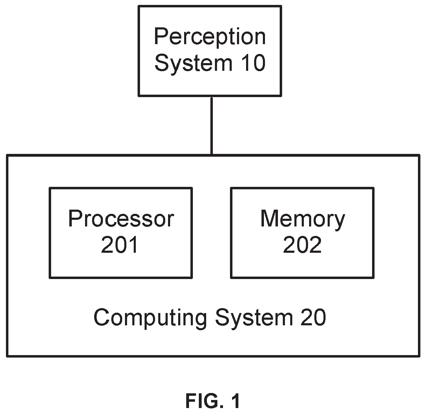

FIG. 1 is a schematic diagram illustrating a system for analyzing an impact property of a contaminant according to an exemplary embodiment of the present disclosure.

As shown in FIG. 1, in an embodiment, the system for analyzing an impact property of a contaminant may include a perception system 10 and a computing system 20, between which data transmission may be performed.

The system for analyzing an impact property of a contaminant is described below by taking the analysis system being applied to a robotic vacuum cleaner as an example.

The perception system 10 may include a vision sensor, which may include an RGB camera, a depth camera, and the like, for acquiring target image information involving a contaminant. On this basis, the perception system 10 may also include other sensors, such as LiDAR, an ultrasonic sensor, a humidity sensor, a gas sensor, and the like. In some examples, the perception system 10 may be provided on the robotic vacuum cleaner. In some other examples, the perception system 10 may alternatively be provided at another position independent of the robotic vacuum cleaner. For example, the perception system 10 may include a surveillance camera provided in a room, or a camera carried by another smart home device.

The computing system 20 may be provided inside the robotic vacuum cleaner, or may be provided on the cloud. The computing system 20 may include one or more processors 201. The processor 201 may include a general-purpose processor, such as a CPU (Central Processing Unit) or a GPU (Graphics Processing Unit), or may include an accelerated computing unit designed for a deep learning task, a robotic vacuum cleaner navigation task, and the like, such as an NPU (Neural Processing Unit). In an implementation, a pre-trained model, which may be a lightweight convolutional neural network or a large language model, may be deployed on the computing system 20. The pre-trained model may be configured for analyzing the target image information acquired by the perception system 10, to recognize the contaminant and a contaminated object, extract a first physical property and a second physical property, and determine an impact property, and may also be configured for determining, based on the impact property, a risk level of the contaminant and a cleaning strategy for the robotic vacuum cleaner, so that the robotic vacuum cleaner performs a corresponding operation based on the cleaning strategy. The present disclosure may implement an intelligent agent by relying on the pre-trained model, and the intelligent agent then performs the method provided in the present disclosure. Furthermore, the intelligent agent may also optimize the pre-trained model based on historical cleaning effects, to improve accuracy of determining the impact property.

In an implementation, the computing system 20 may further include one or more memories 202. The memory 202 may store program instructions executable by the processor 201. The processor 201 may load and execute the program instructions in the memory 202 to implement functions of the computing system 20.

In addition, the memory 202 may also be configured for caching or storing intermediate data or result data generated by the processor 201 during operation, and storing a system file, an application file, a data file, and the like. Exemplarily, the memory 202 may store the target image information and the like acquired by the perception system 10.

Exemplarily, the memory 202 may include, for example, a volatile memory, such as a DRAM (Dynamic Random Access Memory) or a SRAM (Static Random Access Memory); and may include an NVM (Non-Volatile Memory), such as a ROM (Read-Only Memory) or a flash memory.

### Exemplary Method

The method provided in the present disclosure is exemplarily described below by taking the present disclosure being applied to a cleaning device (such as a robotic vacuum cleaner) as an example.

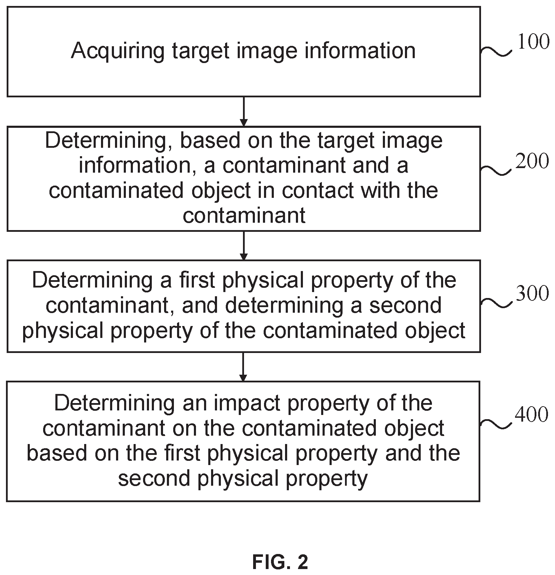

FIG. 2 is a schematic flowchart illustrating a method for analyzing an impact property of a contaminant according to an exemplary embodiment of the present disclosure. As shown in FIG. 2, the method includes the following steps:
Step 100: Acquiring target image information.

In step 100, a camera carried on the cleaning device acquires in real time image information to be analyzed (hereinafter referred to as target image information), or an external camera independent of the cleaning device (such as a surveillance camera in a room, or a camera of another smart home device) may acquire the target image information, and then transmit the target image information to the cleaning device or a cloud server for image analysis. The camera may be a monocular camera, a binocular camera, or a structured-light depth camera, and the like, which is not limited in the present disclosure.

In some examples, the target image information may include visual information, which may be an RGB image containing color information, capable of reflecting information such as color and texture of a contaminant or a contaminated object. In some other examples, the target image information may also include depth information, which may be a depth image, capable of reflecting three-dimensional shape information of the contaminant or the contaminated object, such as size information. In some other examples, the target image information may also include texture information, which may be a texture feature extracted from an image, capable of reflecting surface roughness of the contaminant or the contaminated object.

Step 200: Determining, based on the target image information, a contaminant and a contaminated object in contact with the contaminant.

In step 200, the target image information acquired in the previous step is analyzed to determine, therefrom, a contaminant and a contaminated object in contact with the contaminant. The target image information may include at least one of visual information, depth information, and texture information. Through image analysis (such as object detection or image segmentation) on the target image information, an abnormal region in the image that is distinguished from the background may be recognized, and an object corresponding to this region may be determined as the contaminant.

After the contaminant is determined, an object in contact with the contaminant may be determined as the contaminated object based on a position of the contaminant in the image and an object to which the contaminant is attached. The contaminated object includes a surface to which the contaminant is attached or with which the contaminant is in contact. For example, the contaminated object may include a floor, a carpet, or a tile in contact with the contaminant, or may include a wall, a table top, and the like in contact with the contaminant. Furthermore, considering that the cleaning device may come into contact with the contaminant when cleaning the contaminant, the contaminated object may also include an object in the cleaning device that has a potential contact possibility with the contaminant, such as a mopping cloth or a roller brush of the cleaning device. In this way, in a subsequent step of impact property analysis, an impact that may be produced when the cleaning device uses cleaning tools made of different materials to clean the contaminant may be analyzed simultaneously. For example, a cotton mopping cloth has good water absorbency but is prone to adhesion by the contaminant, while a silicone roller brush is less prone to adhesion but may splash the liquid. This makes it easier to use a more suitable cleaning tool to clean the contaminant, thereby improving a cleaning effect.

Exemplarily, after the robotic vacuum cleaner acquires a target image containing a dark-colored region on a light-colored floor, through analysis of the image, it may be determined that an object corresponding to the dark-colored region is the contaminant (such as cat feces), and a floor surface to which the dark-colored region is attached may be determined as the contaminated object. For another example, if the contaminant is a liquid splashed on a wall, the liquid may be determined as the contaminant by analyzing the target image information, and the wall to which the liquid is attached may be determined as the contaminated object.

In some examples, the target image information may be further analyzed to determine a contaminant category (such as cat feces, broken glass, or milk), and the contaminant category may be used in a subsequent process of determining a first physical property. For details, refer to the relevant description in step 300.

It should be noted that there may be a plurality of specific methods for determining the contaminant and the contaminated object, such as an image feature-based object detection method and a deep learning-based instance segmentation method, provided that the contaminant and the contaminated object to which the contaminant is attached can be distinguished from the target image information. This is not limited in the present disclosure.

Step 300: Determining a first physical property of the contaminant, and determining a second physical property of the contaminated object.

In step 300, for the contaminant, a pre-trained model may be used to analyze an image feature extracted from the target image information, to determine a physical property of the contaminant (referred to as the first physical property hereinafter). The image feature includes, but is not limited to, a color feature (such as RGB components or hue and saturation), a texture feature (such as roughness), a shape feature (such as a contour feature), and a glossiness feature. The first physical property refers to a physical characteristic inherent to the contaminant and independent of an external environment, including, but not limited to, a physical state (such as solid or liquid), surface roughness, humidity, a particle size, viscosity, density, and the like.

In some examples, the first physical property may be represented discretely, for example, a plurality of levels such as "high", "medium", and "low" may be set to represent different degrees of each first physical property. For example, for fresh cat feces, the first physical property may include high humidity, high viscosity, medium density, and the like. For another example, for broken glass, the first physical property may include high hardness, low humidity, low viscosity, and the like. For milk, the first physical property may include high humidity, low viscosity, and the like.

In some other examples, the first physical property may be represented continuously, for example, a value between 0 and 10 may be set to represent different degrees of each first physical property. For example, for fresh cat feces, the first physical property may include humidity of 7, viscosity of 9, medium density of 5, and the like.

In some examples, the contaminant category may first be recognized based on the image feature, for example, recognized as a cat-feces category or a broken-glass category, and then the first physical property of the contaminant may be determined based on a mapping relationship between the contaminant category and the physical property. For example, for common contaminant categories, a mapping table or knowledge graph between contaminant categories and physical properties may be established in advance. In this case, after the cat-feces category is recognized, the first physical property may be directly obtained by table lookup. Determining the first physical property in such a way involves a small amount of computation and a fast response speed.

In some other examples, the first physical property of the contaminant may alternatively be determined not based on the contaminant category; instead, the pre-trained model directly predicts the first physical property of the contaminant based on the image feature; or the image feature may be combined with the recognized contaminant category, such as by adopting an approach such as a feature concatenation or attention fusion, to comprehensively analyze the first physical property of the contaminant. For example, a color feature, a shape feature, a texture feature, and the like may be fused with the recognized contaminant category (such as the cat-feces category) and then input to the pre-trained model to obtain the first physical property. Determining the first physical property in such a way allows for more accurate determination of the physical characteristics of the contaminant, and is particularly applicable to cases where the physical characteristics of the same type of contaminants differ significantly. For example, fresh cat feces and dried cat feces exhibit different first physical properties due to their different moisture levels.

Furthermore, considering that the diffusion speed, adhesion strength, and the like of the contaminant differ when the contaminant is in contact with different contaminated objects, in addition to determining the first physical property of the contaminant, a physical property of the contaminated object in contact with the contaminant (referred to as the second physical property hereinafter) may also be acquired. The second physical property may include, but is not limited to, surface roughness, water absorbency, smoothness, a material type, inclination, and the like. For example, a carpet has a water absorbency much higher than that of a tile, and a smoothness much lower than that of a tile. For another example, a wood floor has a water absorbency between that of a carpet and that of a tile, and a relatively low hardness, and thus is easily scratched by sharp particles.

In some examples, the second physical property may be represented in a discrete form or a continuous form. For details, refer to the description of the representation form of the first physical property in the previous examples, which is not repeated herein.

Step 400: Determining an impact property of the contaminant on the contaminated object based on the first physical property and the second physical property.

In step 400, the first physical property and the second physical property obtained in the foregoing steps are comprehensively analyzed to obtain a specific possible impact of the contaminant on the contaminated object (referred to as an impact property hereinafter). The impact property is used for representing a possible change trend or the like that may be caused after the contaminant comes into contact with the contaminated object. For example, when the contaminant is jam and the contaminated object is a smooth tile, the impact property may include a high adhesion property and a low flow property.

Furthermore, it may be understood that the same contaminant may exhibit different impact properties on different contaminated objects, and therefore, when the same contaminant comes into contact with a plurality of different contaminated objects, impact properties of the contaminant on the respective contaminated objects may be separately analyzed. For example, when the contaminant is cat feces and the contaminated objects include a floor and a mopping cloth of the cleaning device, the impact property of the cat feces on the floor, such as a high adhesion property (readily adhering to a floor surface and difficult to remove) and a medium diffusion property (readily smeared when subjected to an external force), may be determined in combination with the first physical property of the cat feces (such as high viscosity and medium-to-high humidity) and the second physical property of the floor (such as smoothness and non-absorbency); and the impact property of the cat feces on the mopping cloth, such as a high adhesion property (readily adhering to the mopping cloth fibers and difficult to wash off) and a high propagation property (if the mopping cloth continues to clean other regions, the cat feces may be carried to other positions), may also be determined in combination with the first physical property of the cat feces and the second physical property of the mopping cloth (such as being made of cotton and having good water absorbency).

In some examples, there may be a plurality of specific methods for determining the impact property, for example, comprehensive inference analysis may be performed through a pre-trained model based on the first physical property and the second physical property, or matching and mapping of physical properties may be performed based on a preset mapping rule library. This is not limited in the present disclosure.

As can be seen from the foregoing technical solution, according to the method provided in this embodiment of the present disclosure, a contaminant and a contaminated object are determined by analyzing target image information, and a first physical property of the contaminant and a second physical property of the contaminated object are separately acquired and comprehensive analyzed to determine multi-dimensional impact properties, such as diffusion, adhesion, flow, and hazard properties, produced by interaction between the contaminant and the contaminated object, helping a cleaning device implement targeted adjustment of a cleaning strategy, thereby improving a cleaning effect and safety.

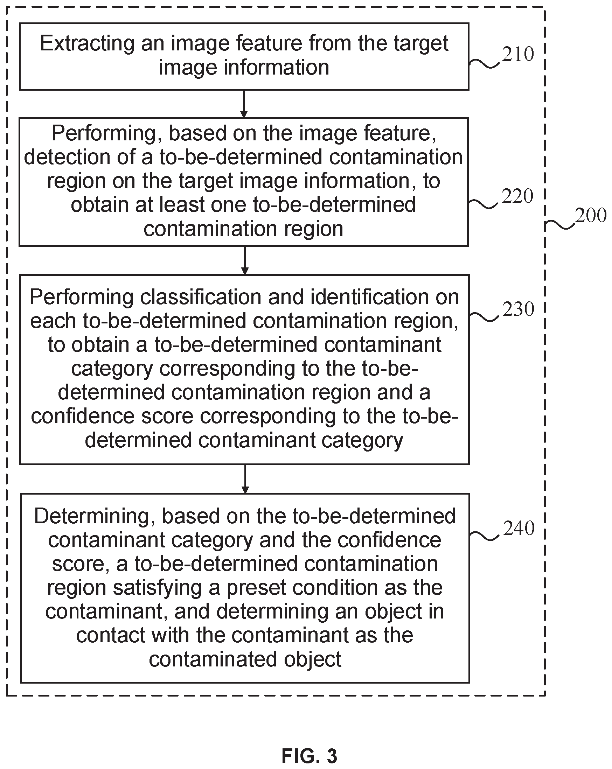

FIG. 3 is a schematic flowchart illustrating determining of a contaminant and a contaminated object according to an exemplary embodiment of the present disclosure. As shown in FIG. 3, based on the foregoing embodiment shown in FIG. 2, step 200 may include the following steps:
Step 210: Extracting an image feature from the target image information.

In step 210, an image feature may first be extracted from the target image information by using a model that is pre-trained (referred to as a pre-trained model hereinafter), for example, a convolutional neural network (such as ResNet or MobileNet). Alternatively, an image feature may be extracted from the target image information by a conventional image processing method, such as a histogram of oriented gradients or a local binary pattern. The image feature includes, but is not limited to, a color feature (such as RGB components or hue and saturation), a texture feature (such as roughness), a shape feature (such as a contour, an area, or a length), and a glossiness feature.

In some examples, a plurality of target images may be acquired to obtain a plurality of pieces of target image information, and image features may then be respectively extracted for the plurality of pieces of target image information and undergo feature fusion, to obtain a richer representation of image characteristics.

Step 220: Performing, based on the image feature, detection of a to-be-determined contamination region on the target image information, to obtain at least one to-be-determined contamination region.

In step 220, the pre-trained model may first be used to detect suspected contamination in the target image information based on image features such as a color feature, a texture feature, and a contour feature, to obtain at least one to-be-determined contamination region. For example, assuming that a robotic vacuum cleaner acquires target image information in real time while moving on a light-colored floor, if presence of a dark-colored region on the light-colored floor is recognized based on the target image information, and an image feature (such as color and texture) of the dark-colored region is significantly different from the surrounding background, the dark-colored region may be marked as a to-be-determined contamination region, and the to-be-determined contamination region may then be further analyzed.

Step 230: Performing classification and identification on each to-be-determined contamination region, to obtain a to-be-determined contaminant category corresponding to the to-be-determined contamination region and a confidence score corresponding to the to-be-determined contaminant category.

In step 230, the to-be-determined contamination region is further analyzed to determine whether the to-be-determined contamination region is a contaminant.

In some examples, the pre-trained model may be used to determine the to-be-determined contaminant category corresponding to the to-be-determined contamination region and the confidence score corresponding to the to-be-determined contaminant category, for example, determining that the to-be-determined contaminant category is a cat-feces category and a corresponding confidence score is 0.9.

In some examples, if the confidence score corresponding to the to-be-determined contaminant category is relatively low, for example, the pre-trained model outputs a confidence score of 0.5 for the to-be-determined contaminant category being honey and a confidence score of 0.4 for the to-be-determined contaminant category being jam, information requesting secondary confirmation may be sent to a user to be submitted to the user for final confirmation.

In some other examples, if the pre-trained model outputs a plurality of to-be-determined contaminant categories with similar confidence scores, first physical properties of the plurality of to-be-determined contaminant categories may be comprehensively analyzed. For example, with respect to the foregoing case in which the confidence score of the to-be-determined contaminant category being honey is 0.5 and the confidence score of the to-be-determined contaminant category being jam is 0.4, considering that physical characteristics of honey and jam are relatively close, and corresponding cleaning operations do not differ significantly, for example, both requiring disabling a roller brush, two to-be-determined contaminant categories may be marked for the to-be-determined contamination region, so that the honey type and the jam type may be merged in a subsequent step to comprehensively determine the first physical property. The resulting first physical property can satisfy cleaning requirements for both honey and jam, thereby enabling determination of the contaminant and subsequent automatic cleaning to be completed without manual confirmation by the user.

Step 240: Determining, based on the to-be-determined contaminant category and the confidence score, a to-be-determined contamination region satisfying a preset condition as the contaminant, and determining an object in contact with the contaminant as the contaminated object.

In step 240, classification results of to-be-determined contamination regions are screened by using the preset condition, and a to-be-determined contamination region satisfying the preset condition is determined as the contaminant. The preset condition is a preset contaminant screening condition, and may include, but is not limited to, a category screening condition, a confidence score filtering condition, and the like.

For example, if the to-be-determined contaminant category belongs to a major contaminant category and the confidence score reaches a preset threshold, the to-be-determined contamination region may be determined as the contaminant. For example, because the to-be-determined contaminant category determined in the previous step is the cat-feces category, which belongs to the major contaminant category, and the confidence score 0.9 is greater than the preset threshold, the to-be-determined contamination region may be determined as the contaminant. However, if the to-be-determined contaminant category belongs to the major contaminant category but the confidence score does not reach the preset threshold, or the to-be-determined contaminant category does not belong to the major contaminant category, it may be determined that the target object is not a contaminant. For example, if the to-be-determined contaminant category determined is a toy with a confidence score of 0.95, it may be determined that the to-be-determined contamination region is not a contaminant, thereby preventing the cleaning device from mistakenly cleaning the toy.

In some examples, if the to-be-determined contamination region is determined as the contaminant, the to-be-determined contaminant category may be used as the contaminant category, and the first physical property may then be determined based on the contaminant category. For details, refer to the foregoing embodiment, which is not repeated herein. If it is determined that the to-be-determined contamination region does not satisfy the preset condition, it is considered that the to-be-determined contamination region is not a contaminant, and determination of the first physical property is not further performed.

If it is determined that the to-be-determined contamination region is a contaminant, a spatial adjacency relationship of the contaminant may be further analyzed, and an object directly in spatial contact with the contaminant may be determined as a contaminated object. For example, if a puddle of liquid on the floor is detected in the target image information and the liquid region is recognized as a contaminant, the floor region in contact with the liquid may be determined as a contaminated object.

As can be seen from the foregoing technical solution, according to the method provided in this embodiment of the present disclosure, a to-be-determined contaminant category and a corresponding confidence score are analyzed, and then, whether a to-be-determined contamination region is a contaminant is further determined based on the to-be-determined contaminant category and the confidence score. In this way, accuracy of contaminant determination can be ensured, thereby preventing another target from being mistakenly determined as a contaminant.

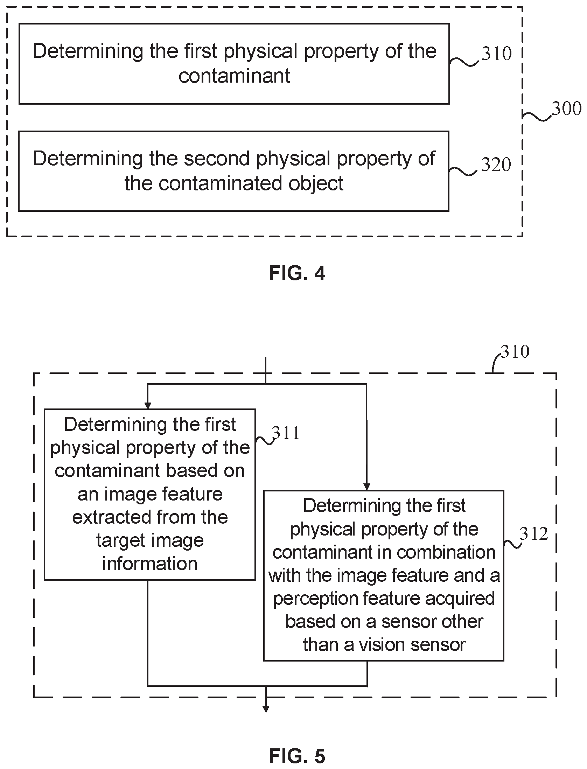

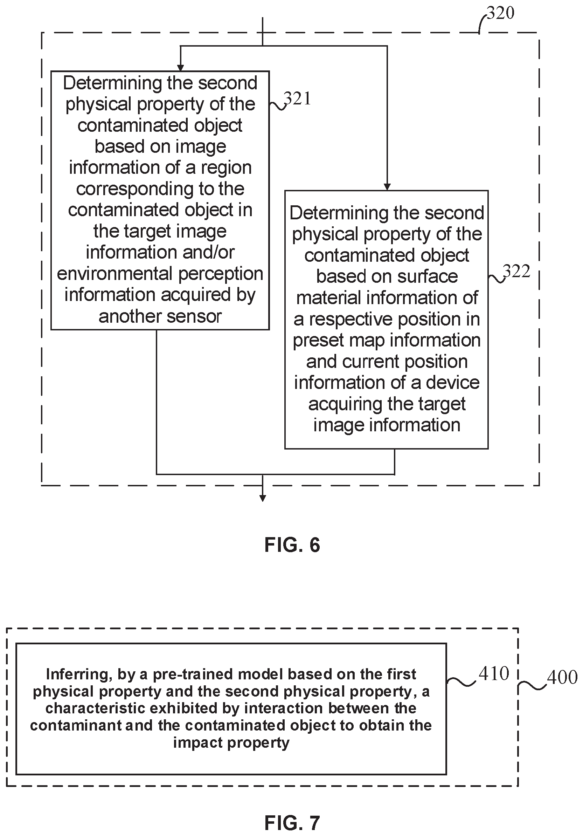

FIG. 4 is a schematic flowchart illustrating determining of a physical property according to an exemplary embodiment of the present disclosure. As shown in FIG. 4, based on the foregoing embodiment shown in FIG. 2, step 300 may include: step 310, determining the first physical property of the contaminant; and step 320, determining the second physical property of the contaminated object. Step 310 and step 320 may be implemented in the same or different ways. For details, refer to relevant embodiments corresponding to FIG. 5 and FIG. 6 below.

FIG. 5 is a schematic flowchart illustrating determining of a first physical property according to another exemplary embodiment of the present disclosure. As shown in FIG. 5, based on the foregoing embodiment shown in FIG. 4, step 310 may include the following step 311 or step 312:
Step 311: Determining the first physical property of the contaminant based on an image feature extracted from the target image information.

In step 311, a pre-trained model may be used to analyze and infer an image feature (such as a color feature, a texture feature, or a shape feature) extracted from the target image information, to directly infer the first physical property of the contaminant. Specifically, by learning a large number of samples of correspondence between image features and physical properties, the pre-trained model is capable of establishing a mapping from a visual feature to a physical property, thereby outputting the first physical property (such as a viscosity level, a humidity level, or a hardness level) of the contaminant after the image feature is input. Exemplarily, after a camera captures a target image containing cat feces, the pre-trained model may directly predict, based on image features (dark brown color, irregular shape, and rough surface texture) of the region, that the viscosity of the cat feces is "high" and the humidity is "medium-to-high", thereby obtaining the first physical property, such as high viscosity and medium-to-high humidity.

Step 312: Determining the first physical property of the contaminant based on an image feature extracted from the target image information in combination with a perception feature acquired based on a sensor other than a vision sensor.

In step 312, when determining the first physical property of the contaminant, a perception feature acquired by another sensor may also be considered in addition to the image feature extracted from the target image information acquired by a vision sensor (such as a camera),.

The another sensor may include a sensor that can be configured for acquiring three-dimensional spatial information, such as LiDAR, and may also include an ultrasonic sensor, a humidity sensor, a gas sensor, and the like.

Exemplarily, the camera may acquire the target image information, and recognize presence of a cat-feces contaminant in the target image information. At this time, three-dimensional point cloud data of the contaminant that is acquired by the LiDAR and an echo time and intensity that are acquired by the ultrasonic sensor may be used in combination to analyze a three-dimensional shape of the cat feces. A humidity value of the surrounding environment or a surface of the contaminant that is detected by the humidity sensor may also be used to analyze freshness of the cat feces and determine whether it is a semi-dried stain. Furthermore, a volatile gas component detected by the gas sensor may also be used to further determine whether the contaminant is cat feces, thereby preventing chocolate, jam, or the like from being mistakenly determined as cat feces.

In some examples, in addition to being used for determining the first physical property, the perception feature acquired by the another sensor may also be used for assisting in determining a to-be-determined contaminant category. For example, during detection of the target image information and determination of a to-be-determined contaminant category and a confidence score, a perception feature acquired by a sensor such as LiDAR, an ultrasonic sensor, a humidity sensor, or a gas sensor may be referenced, to improve accuracy of contaminant determination.

As can be seen from the foregoing technical solution, according to the method provided in this embodiment of the present disclosure, the method in step 311 can complete the determination of the first physical property by relying only on a vision sensor, which is simple to implement and low in cost and applicable to an application scenario with limited computing resources. The method in step 312 can acquire physical information of the contaminant beyond the visual level (such as temperature, composition, and internal structure) by fusing the image feature with the perception feature of the another sensor, thereby more comprehensively and accurately determining the first physical property of the contaminant, which is particularly applicable to a scenario in which it is difficult to perform distinguishing with a single visual perspective, such as distinguishing water from oil, or fresh cat feces from dried cat feces.

FIG. 6 is a schematic flowchart illustrating determining of a second physical property according to an exemplary embodiment of the present disclosure. As shown in FIG. 6, based on the foregoing embodiment shown in FIG. 4, step 320 may include the following step 321 or step 322:
Step 321: Determining the second physical property of the contaminated object based on image information of a region corresponding to the contaminated object in the target image information and/or environmental perception information acquired by another sensor.

In step 321, the contaminated object and its surrounding region can be segmented from the target image information, and the second physical property of the contaminated object can then be determined by analyzing image information such as texture, color, and glossiness of the region. For example, if the target image information contains cat feces and a contaminated object (such as a ground), the ground region may be segmented, and image information of the ground region may then be analyzed to identify whether the ground is a smooth tile or a plush carpet.

In some examples, the second physical property of the contaminated object may also be analyzed by using a sensor other than a vision sensor. For example, echo intensity of LiDAR, a ultrasonic reflection characteristic, and the like may be used in combination to assist in determining hardness and roughness of the contaminated object. For another example, temperature distribution information of the contaminated object may be acquired by using an infrared thermal imaging sensor, and surface material information of the contaminated object may be determined with assistance based on a characteristic that different materials have different temperature conduction properties. In this way, through multi-sensor fusion, the second physical property of the contaminated object can still be relatively accurately determined even when visual information is insufficient (such as insufficient lighting or unclear texture).

In some examples, such as in scenarios with poor lighting conditions, unclear image texture, or a blocked camera, the second physical property of the contaminated object may alternatively be determined solely based on the perception information acquired by the another sensor, without relying on the target image information.

Step 322: Determining the second physical property of the contaminated object based on surface material information of a respective position in preset map information and current position information of a device acquiring the target image information.

In step 322, for an application scenario in which a camera on a device (such as a cleaning device or a surveillance device) acquires target image information, the second physical property of the contaminated object may be determined based on current position information of the device and map information of a pre-constructed environmental map. The current position information refers to position information of the device when the device acquires the target image information.

Exemplarily, the environmental map may be pre-constructed, and surface material information of different regions may be annotated in the map information. Furthermore, a cleaning device (such as a robotic vacuum cleaner) may acquire in real time position information thereof through a positioning technology during operation. In this way, based on position information (referred to as current position information hereinafter) of the robotic vacuum cleaner during acquisition of the target image information, a region corresponding to this position may be queried in the map information, and the second physical property of the contaminated object may then be determined based on a surface material of the region corresponding to this position. For example, the map information may be pre-annotated to indicate that a living room floor is made of tile, a bedroom floor is made of a wood floor, and a study floor is made of carpet. The robotic vacuum cleaner determines, based on the current position information when acquiring the target image information, that the position belongs to the living-room region, and thus determines that the surface material is tile, so that the second physical property of the contaminated object can be determined based on physical characteristics of the tile. In this way, the second physical property can be determined without image analysis, resulting in higher efficiency.

It should be noted that the method for determining the position of the contaminated object may vary with devices acquiring the target image information. For example, for a cleaning device such as a robotic vacuum cleaner, a camera is mounted on the cleaning device. When the cleaning device acquires the target image information involving the contaminant, the contaminant is typically located at a relatively close distance in front of the cleaning device. Therefore, the current position information of the cleaning device can approximately represent the positions of the contaminant and the contaminated object. In some examples, to further improve accuracy, the target image information may also be used to determine a relative positional relationship between the cleaning device and the contaminant when the cleaning device captures the target image information. Then, based on the current position information in the previous example, in combination with the relative positional relationship, the position of the contaminated object is comprehensively determined. The surface material and the second-physical-property are then determined based on the position of the contaminated object. For a surveillance device, such as a fixed camera in a room, because the position of the surveillance device is fixed and the position of the surveillance device cannot be used to approximately represent the positions of the contaminant and the contaminated object, a relative positional relationship between the surveillance device and the contaminant may also be determined, and then, based on the current position information of the surveillance device, in combination with the relative positional relationship, the position of the contaminated object is comprehensively determined.

In some examples, if it is determined, based on the current position information, that the position of the contaminated object is located at an edge between two regions, auxiliary determination may be performed in combination with image information of a contaminated-object region in the target image information. For example, the contaminated-object region surrounding the contaminant may be segmented from the target image information, and whether it is floor texture or carpet pile may be recognized by analyzing visual features such as texture and color of the contaminated-object region, thereby determining an actual surface material and the second physical property of the contaminated object. In some other examples, if accurate determination cannot be made through the target image information and the current position information, a physical property corresponding to higher cleaning difficulty among physical properties of materials of the two regions may be used as the second physical property (such as using a physical property of a carpet as the second physical property), to ensure the cleaning effect under uncertain circumstances and avoid incomplete cleaning caused by incorrect material determination.

As can be seen from the foregoing technical solution, according to the method provided in this embodiment of the present disclosure, the second physical property of the contaminated object can be flexibly acquired in two ways, namely, through real-time image analysis and preset map information. This can adapt to different scenarios and ensure efficiency and accuracy of the analysis.

FIG. 7 is a schematic flowchart illustrating determining of an impact property according to another exemplary embodiment of the present disclosure. As shown in FIG. 7, based on the foregoing embodiment shown in FIG. 2, step 400 may include the following steps:

Step 410: Inferring, by a pre-trained model based on the first physical property and the second physical property, a characteristic exhibited by interaction between the contaminant and the contaminated object to obtain the impact property.

In step 410, a characteristic exhibited by the interaction between the contaminant and the contaminated object may be analyzed by a pre-trained model based on the first physical property and the second physical property to obtain the impact property. For example, the first physical property and the second physical property may be concatenated into a multi-dimensional feature vector and then input to the pre-trained model. The pre-trained model infers correlated interaction between the first physical property and the second physical property, outputs an inference result of the impact property, and may also output a confidence score of each impact property.

The impact property may include a diffusion property. The diffusion property refers to a property of the contaminant expanding from its current position to a surrounding region, for example, milk falling on a floor and spreading rapidly.

The impact property may include an adhesion property. The adhesion property refers to a property of the contaminant adhering to the contaminated object, for example, cat feces easily adhering to a mopping cloth of a robotic vacuum cleaner.

The impact property may include a flow property. The flow property refers to a property of the contaminant undergoing displacement due to the influence of gravity or due to the influence of inclination of a contact surface with the contaminated object, for example, milk flowing downward on a sloped tile.

The impact property may include a hazard property. The hazard property refers to a property of the contaminant causing a safety hazard, including but not limited to, a corrosion hazard property (such as an acidic liquid corroding a wood floor), a toxicity hazard property (such as certain chemicals), a biological hazard property (such as bacteria that may be carried by excrement), a physical hazard property (such as broken glass causing a child to be cut), and the like.

The impact property may include a propagation property. The propagation property refers to a property that the contaminant is carried or transferred to another position through an intermediate medium (such as a cleaning tool of a cleaning device, movement of a person, or activity of a pet), for example, cat feces being carried by a mopping cloth of a robotic vacuum cleaner from the center of a living room to a position under a sofa.

The impact property may include a cleaning constraint property. The cleaning constraint property refers to a rule that a cleaning device should follow during cleaning to effectively clean the contaminant. For example, for cat feces with high adhesion and high propagation properties, the cleaning constraint property may include "no use of the roller brush" and "no mopping", to prevent the contaminant from being crushed and smeared or diffused over a larger range.

The cleaning constraint property may include a cleaning priority constraint. The cleaning priority constraint is used for constraining a cleaning sequence of a cleaning device with respect to different regions or different contaminants. For example, for a contaminant with a high diffusion property and a high flow property, such as milk spilled on a floor, a relatively high priority may be set, to prioritize cleaning to avoid an expanded diffusion range. For another example, for a contaminant with low adhesion, diffusion, and hazard properties, such as paper scraps, a relatively low priority may be set, and such a contaminant may be handled after other regions have been cleaned.

The cleaning constraint property may include a cleaning notification constraint. The cleaning notification constraint is used for constraining whether and how a cleaning device sends a notification to a user. For example, for a contaminant with a high hazard property (such as broken glass), the cleaning notification constraint may include "send a cleanup request to the user", to prompt the user to intervene manually.

The cleaning constraint property may include a cleaning approach constraint. The cleaning approach constraint is used for constraining a specific cleaning action used by a cleaning device when performing a cleaning operation. For example, for a contaminant with a high adhesion property, such as cat feces, the cleaning approach constraint may include "vacuuming before wiping", "no crushing", and "no mopping", to prevent the cat feces from being crushed into floor gaps, and to prevent the mopping cloth from smearing and spreading the contaminant over a larger range.

The cleaning constraint property may include a cleaning tool constraint. The cleaning tool constraint is used for constraining a cleaning tool to be enabled or disabled when a cleaning device performs a cleaning operation. For example, for a hard, granular contaminant, such as broken glass on a floor, the cleaning tool constraint may include disabling the roller brush to prevent scratching the floor.

The cleaning constraint property may include a cleaning mode constraint. The cleaning mode constraint is used for constraining an overall working mode that a cleaning device should adopt. For example, for a contaminant with a high adhesion property and being easily diffused, such as jam on a floor, the cleaning mode constraint may include "switching to a deep cleaning mode", in which mode the cleaning device performs cleaning at a slower speed, follows a more intensive path, and may increase the number of cleaning passes, to improve the cleaning effect. It should be noted that the determination of the cleaning constraint property depends on the impact property of the contaminant on the contaminated object, that is, a result of a combined effect of the first physical property and the second physical property, rather than considering the contaminant alone. For example, for a contaminant with high adhesion and high permeability, such as jam on a carpet, considering the high permeability of the jam on the carpet, repeated cleaning may cause the jam to further permeate deeper into carpet fibers. Therefore, the cleaning mode constraint may include "switching to a vacuuming-before-wiping mode" and reducing the number of cleaning passes.

The cleaning constraint property may include a cleaning parameter constraint. The cleaning parameter constraint is used for constraining a specific operating parameter value of a cleaning device. For example, for a liquid contaminant, the cleaning parameter constraint may include "adjusting the suction power to a high level" to improve liquid suction efficiency. For a powdery contaminant easily diffused, the cleaning parameter constraint may include "reducing the travel speed to 0.1 m/s" to reduce airflow disturbance.

The cleaning constraint property may include a cleaning path constraint. The cleaning path constraint is used for constraining a movement path planning approach of a cleaning device. For example, for a liquid contaminant easily diffused, such as milk spilled on a floor, the cleaning path constraint may include a movement path of "spiraling inward from the periphery toward the center", to prevent the contaminant from being pushed to a larger range. For a contaminant with a high adhesion property, such as jam on a floor, the cleaning path constraint may include a movement path of "repeated back-and-forth coverage". In addition, the cleaning path constraint may further include limiting a maximum number of passes of the cleaning device in the contaminated region, to prevent the contaminant from being embedded in the ground or diffused due to excessive crushing.

As can be seen from the foregoing technical solution, according to the method provided in this embodiment of the present disclosure, a pre-trained model may be used to comprehensively analyze a first physical property of a contaminant and a second physical property of a contaminated object, and determine multi-dimensional impact properties, such as diffusion, adhesion, flow, and hazard properties, produced by interaction between the contaminant and the contaminated object, helping a cleaning device implement targeted adjustment of a cleaning strategy, thereby improving a cleaning effect and safety.

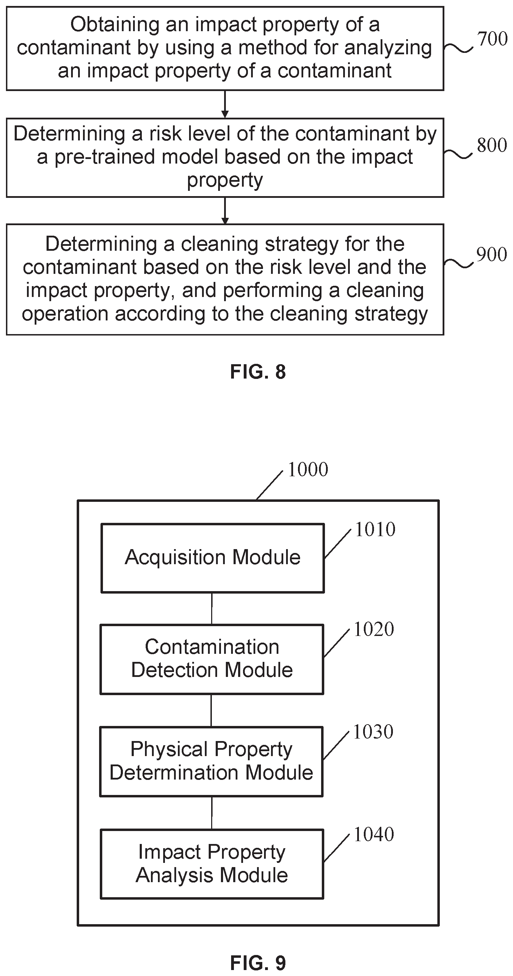

FIG. 8 is a schematic flowchart illustrating a cleaning method according to an exemplary embodiment of the present disclosure. As shown in FIG. 8, the method may include the following steps:
Step 700: Obtaining an impact property of a contaminant by using a method for analyzing an impact property of a contaminant.

In step 700, the method for analyzing an impact property of a contaminant in any of the foregoing exemplary embodiments may be used to determine the impact property of the contaminant on the contaminated object based on the target image information.

Step 800: Determining a risk level of the contaminant by a pre-trained model based on the impact property.

In step 800, the impact property determined in the previous step is analyzed to perform a risk level assessment of the contaminant. Specifically, the impact property determined in the previous step, such as one or more of a diffusion property, an adhesion property, a flow property, and a hazard property, may be input to the pre-trained model. The pre-trained model may comprehensively analyze a value or a level of each impact property, and output a final risk level. For example, for milk spilled on a tile, the pre-trained model may comprehensively analyze its impact properties of a high diffusion property, a low adhesion property, and a low hazard property to determine a corresponding risk level. For another example, for broken glass fallen on a floor, the pre-trained model may comprehensively analyze its impact properties of a low diffusion property, a low adhesion property, and a high hazard property to determine a corresponding risk level. In this way, quantifying the impact property of the contaminant on the contaminated object as a risk level can provide a basis for cleaning decision-making and cleaning, thereby improving a cleaning effect.

In some examples, the risk level includes a contamination diffusion risk level. The diffusion risk level is used for characterizing, from a plurality of aspects such as diffusion, adhesion, and flow, the possibility of the contaminant diffusing on the contact surface, for example, milk being easily diffused on a carpet, resulting in a relatively high contamination diffusion risk level. For another example, cat feces have high adhesion on the contact surface, resulting in a relatively high contamination diffusion risk level.

In some examples, the risk level includes a hazard risk level. The hazard risk level is used for characterizing a safety hazard caused by the contaminant, for example, water diffusing near an electrical appliance may cause electrical leakage, and broken glass scattered on a floor may cut a child or a pet, resulting in a relatively high hazard risk level. In contrast, ordinary dust or paper scraps have a relatively low hazard risk level.

In some examples, during determination of the risk level of the contaminant based on the impact property, the position of the contaminant and an estimated diffusion range may also be considered. For example, if a position of water on a floor is far from an electrical appliance and an estimated diffusion range is relatively small, the hazard risk level is relatively low. If the position of the water is close to a socket or an electrical appliance, or the estimated diffusion range includes a position of the electrical appliance, the hazard risk level is increased. For another example, a hazard risk level of broken glass concentrated in a corner of a room is lower than that of broken glass scattered in the center of a living room.

Step 900: Determining a cleaning strategy for the contaminant based on the risk level and the impact property, and performing a cleaning operation according to the cleaning strategy.

In step 900, based on the risk level and the impact property determined in the previous steps, a cleaning strategy for the current contaminant is generated to clean the contaminant.

In some examples, an execution subject of the cleaning operation may first be determined based on the risk level. Specifically, if the risk level is relatively low, such as for a contaminant like ordinary dust or paper scraps, the cleaning device may be determined as the execution subject, and the cleaning device automatically performs cleaning. If the risk level is relatively high, such as for cat feces or water stains near an electrical appliance, a manual operating subject is determined as the execution subject of the cleaning operation, and the cleaning operation is performed manually to prevent diffusion of the contaminant, damage to the device, or a safety hazard from being caused by an improper cleaning operation by the cleaning device.

When it is determined that the cleaning operation needs to be performed manually, the cleaning device may send a prompt message to a user through voice broadcast, mobile terminal push notification, indicator light flashing, or the like, to remind the user to handle the issue in time. The prompt message may include information such as the contaminant category, position, and risk level.

When it is determined that the cleaning operation is to be performed by the cleaning device, a cleaning strategy for the contaminant may be further generated based on the impact property determined in the previous steps or in combination with the risk level, so that the cleaning device can perform a specific cleaning operation based on the cleaning strategy. The cleaning strategy may include a specific position at which the cleaning operation needs to be performed, and may also include a cleaning constraint that the cleaning device should follow when the cleaning device performs the cleaning operation. The cleaning constraint includes at least one of a cleaning priority constraint, a cleaning approach constraint, a cleaning tool constraint, a cleaning mode constraint, a cleaning parameter constraint, and a cleaning path constraint. For specific definitions and examples, refer to the relevant description of the cleaning constraint property in step 410 above, which will not be repeated herein.

As can be seen from the foregoing technical solution, according to the method provided in this embodiment of the present disclosure, an execution subject (a cleaning device or a manual operation) is determined based on a risk level, and when it is determined that the cleaning device performs automatic cleaning, a cleaning strategy that includes multi-dimensional cleaning constraints is generated based on an impact property. This enables the cleaning device to adopt differentiated and refined cleaning operations for physical characteristics when different contaminants are in contact with different contaminated objects, thereby effectively improving a cleaning effect and avoiding secondary contamination, device damage, or a potential safety hazard.

### Exemplary Apparatus

The method for analyzing an impact property of a contaminant provided in the embodiments of the present disclosure is described above. It can be understood that, to implement the various functions of the method for analyzing an impact property of a contaminant, an integrated circuit system may include corresponding hardware and software for implementing hardware functions.

A person skilled in the art should readily appreciate that, the steps of the method for analyzing an impact property of a contaminant that are described in conjunction with the embodiments of the present disclosure can be implemented in a form of hardware or a combination of software-driven hardware in the embodiments of the present disclosure. Whether a certain function is implemented in a form of hardware or software-driven hardware depends on specific application and design constraints of the technical solutions. A person skilled in the art may use different methods to implement the described functions for each specific application, but such implementation should not be considered as being beyond the scope of the present disclosure.

FIG. 9 is a schematic diagram illustrating a structure of an apparatus for analyzing an impact property of a contaminant according to an exemplary embodiment of the present disclosure. As shown in FIG. 9, in an embodiment, the apparatus 1000 for analyzing an impact property of a contaminant includes an acquisition module 1010, a contamination detection module 1020, a physical property determination module 1030, and an impact property analysis module 1040.

The acquisition module 1010 is configured for acquiring target image information. The contamination detection module 1020 is configured for determining, based on the target image information, a contaminant and a contaminated object in contact with the contaminant. The physical property determination module 1030 is configured for determining a first physical property of the contaminant, and determining a second physical property of the contaminated object. The impact property analysis module 1040 is configured for determining an impact property of the contaminant on the contaminated object based on the first physical property and the second physical property.

In an exemplary embodiment, the contamination detection module 1020 is configured for: extracting an image feature from the target image information;
performing, based on the image feature, detection of a to-be-determined contamination region on the target image information, to obtain at least one to-be-determined contamination region; performing classification and identification on each to-be-determined contamination region, to obtain a to-be-determined contaminant category corresponding to the to-be-determined contamination region and a confidence score corresponding to the to-be-determined contaminant category; and determining, based on the to-be-determined contaminant category and the confidence score, a to-be-determined contamination region satisfying a preset condition as the contaminant, and determining an object in contact with the contaminant as the contaminated object.

In an exemplary embodiment, the physical property determination module 1030 is configured for: determining the first physical property of the contaminant based on an image feature extracted from the target image information; or determining the first physical property of the contaminant based on an image feature extracted from the target image information in combination with a perception feature acquired based on a sensor other than a vision sensor.

In an exemplary embodiment, the physical property determination module 1030 is configured for: determining the second physical property of the contaminated object based on image information of a region corresponding to the contaminated object in the target image information and/or environmental perception information acquired by another sensor; and/or determining the second physical property of the contaminated object based on surface material information of a respective position in preset map information and current position information of a device acquiring the target image information.

In an exemplary embodiment, the impact property analysis module 1040 is configured for: inferring, by a pre-trained model based on the first physical property and the second physical property, a characteristic exhibited by interaction between the contaminant and the contaminated object to obtain the impact property, wherein the impact property includes at least one of a diffusion property, an adhesion property, a flow property, a hazard property, a propagation property, and a cleaning constraint property.

In an exemplary embodiment, the cleaning constraint property includes at least one of a cleaning priority constraint, a cleaning notification constraint, a cleaning approach constraint, a cleaning tool constraint, a cleaning mode constraint, a cleaning parameter constraint, and a cleaning path constraint.

In an exemplary embodiment, the target image information includes at least one of visual information, depth information, and texture information.

In an exemplary embodiment, the impact property analysis module 1040 may further include a contamination semantic analysis submodule (for determining the impact property), a contamination risk level submodule (for determining a risk level), and a contamination behavior mapping submodule (for generating a cleaning strategy), respectively corresponding to the functions of the foregoing step 400, step 800, and step 900, which are not repeated herein.

A person skilled in the art can understand that the operations performed by each module in the foregoing apparatus embodiment and the technical effects thereof correspond to the operations and technical effects of the corresponding steps in the foregoing method embodiments; for the specific implementations and technical effects thereof, reference may be made to the relevant description of the foregoing method embodiments, which are not repeated herein.

### Exemplary Electronic Device

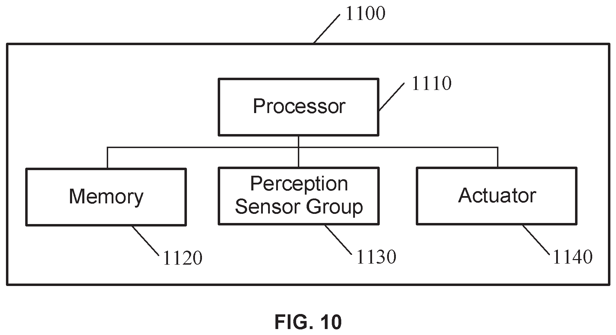

FIG. 10 is a diagram illustrating a structure of a cleaning device according to an exemplary embodiment of the present disclosure. As shown in FIG. 10, the cleaning device 1100 includes at least one processor 1110 and a memory 1120.

The processor 1110 may be a CPU or another form of processing unit having a data processing capability and/or an instruction execution capability, and may control another component in the cleaning device 1100 to perform a desired function.

The memory 1120 may include one or more computer program products. The computer program product may include various forms of computer readable storage media, such as a volatile memory and/or a non-volatile memory. The volatile memory may include, for example, a RAM (Random Access Memory) and/or a cache. The non-volatile memory may include, for example, a ROM, a hard disk, or a flash memory. The computer readable storage medium may store one or more computer program instructions. The processor 1110 may run the one or more computer program instructions to implement the method for analyzing an impact property of a contaminant and/or other desired functions in the foregoing embodiments of the present disclosure. By executing the foregoing computer program instructions, the cleaning device 1100 is capable of performing the method for analyzing an impact property of a contaminant and/or the cleaning method described in the foregoing method embodiments, and has the same technical effects as the foregoing method embodiments. For details, reference may be made to the description of the foregoing method embodiments, which are not repeated herein.

In some examples, the cleaning device 1100 may further include a perception sensor group 1130 and an actuator 1140. The components are interconnected through a bus system and/or another form of connection mechanism (not shown).

The perception sensor group 1130 may include, but is not limited to, a camera, LiDAR, an ultrasonic sensor, a humidity sensor, a gas sensor, an infrared sensor, and the like.

The actuator 1140 may include, but is not limited to, a drive wheel, a roller brush, a mopping cloth, a suction motor, a cleaning liquid spraying device, and the like.

Certainly, for simplicity, only some components in the electronic device 1100 that are related to the present disclosure are shown in FIG. 10, and components such as a power management module, a communication module, an IMU (Inertial Measurement Unit), and a charging interface are omitted. Besides, the cleaning device 1100 may further include any other appropriate components depending on specific applications.

### Exemplary Computer Program Product And Computer Readable Storage Medium

In addition to the foregoing method and device, the embodiments of the present disclosure may also relate to a computer program product including computer program instructions that, when executed by a processor, cause the processor to perform the steps of the method for analyzing an impact property of a contaminant according to the embodiments of the present disclosure that is described in the "Exemplary Method" section of this specification.

The computer program product may be program code, written with one or any combination of a plurality of programming languages, that is configured to perform the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

When executed by a processor, the computer program product is capable of implementing the method for analyzing an impact property of a contaminant and/or the cleaning method described in the foregoing method embodiments, and has the same technical effects as the foregoing method embodiments. For details, reference may be made to the description of the foregoing method embodiments, which are not repeated herein.

Furthermore, the embodiments of the present disclosure may further relate to a computer readable storage medium, on which computer program instructions are stored. The computer program instructions, when executed by a processor, cause the processor to perform the steps of the method for analyzing an impact property of a contaminant according to the embodiments of the present disclosure that is described in the above "Exemplary Method" section of this specification.

The computer readable storage medium may be one readable medium or any combination of a plurality of readable media. The readable medium may be a readable signal medium or a readable storage medium. The readable storage medium may include, for example, but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a RAM, a ROM, an erasable programmable ROM (an EPROM or a flash memory), an optical fiber, a portable compact disk ROM (CD-ROM), an optical storage device, a magnetic storage device, or any suitable combination of the above.

When executed by a processor, the program instructions stored on the computer readable storage medium are capable of implementing the method for analyzing an impact property of a contaminant and/or the cleaning method described in the foregoing method embodiments, and have the same technical effects as the foregoing method embodiments. For details, reference may be made to the description of the foregoing method embodiments, which are not repeated herein.

Basic principles of the present disclosure are described above in combination with specific embodiments. However, it should be pointed out that the advantages, superiorities, effects, and the like mentioned in the present disclosure are merely examples rather than limitations, and it should not be considered that these advantages, superiorities, effects, and the like are necessary for each of the embodiments of the present disclosure. In addition, specific details disclosed above are merely for examples and for ease of understanding, rather than limitations. The details described above do not limit that the present disclosure must be implemented by using the foregoing specific details.

The block diagrams of the means, apparatus, device, and system involved in the present disclosure are provided as illustrative examples only, and it is not intended to require or imply that they should be connected, arranged, or configured in the manner illustrated in the block diagrams. As a person skilled in the art will appreciate, these means, apparatuses, devices, and systems may be connected, arranged, or configured in any manner. Terms such as "including", "containing", and "having" are open-ended terms, and refer to and may be used interchangeably with "including but not limited to". The terms "or" and "and" as used herein refer to and may be used interchangeably with the term "and/or", unless otherwise clearly stated in the context. The term "such as" as used herein refers to and may be used interchangeably with the term "such as, but not limited to".

It should be further pointed out that, various components or various steps in the apparatus, the device, and the methods of the present disclosure may be decomposed and/or recombined. These decompositions and/or recombinations should be considered as equivalent solutions of the present disclosure.

The above description of the disclosed aspects is provided, so that the present disclosure may be arrived at or carried out by any person skilled in the art. Various modifications to these aspects will be readily apparent to a person skilled in the art, and the generic principles defined herein may be applied to other aspects without departing from the scope of the present disclosure. Therefore, the present disclosure is not intended to be limited to the aspects shown herein, but rather to the widest scope consistent with the principles and novel features disclosed herein.

The above description has been given for the purposes of illustration and description. Furthermore, this description is not intended to limit the embodiments of the present disclosure to the forms disclosed herein. Although a plurality of exemplary aspects and embodiments have been discussed above, a person skilled in the art will figure out certain variations, modifications, changes, additions, and subcombinations thereof.

## Claims

1. A method for analyzing an impact property of a contaminant, the method comprising:
acquiring (100) target image information;
determining (200), based on the target image information, a contaminant and a contaminated object in contact with the contaminant;
determining (300) a first physical property of the contaminant, and determining a second physical property of the contaminated object; and
determining (400) an impact property of the contaminant on the contaminated object based on the first physical property and the second physical property.

2. The method for analyzing an impact property of a contaminant according to claim 1, wherein the determining (200), based on the target image information, a contaminant and a contaminated object in contact with the contaminant comprises:
extracting (210) an image feature from the target image information;
performing (220), based on the image feature, detection of a to-be-determined contamination region on the target image information, to obtain at least one to-be-determined contamination region;
performing (230) classification and identification on each to-be-determined contamination region, to obtain a to-be-determined contaminant category corresponding to the to-be-determined contamination region and a confidence score corresponding to the to-be-determined contaminant category; and
determining (240), based on the to-be-determined contaminant category and the confidence score, a to-be-determined contamination region satisfying a preset condition as the contaminant, and determining an object in contact with the contaminant as the contaminated object.

3. The method for analyzing an impact property of a contaminant according to claim 1, wherein the determining (300) a first physical property of the contaminant comprises:
determining (311) the first physical property of the contaminant based on an image feature extracted from the target image information; or
determining (311) the first physical property of the contaminant based on an image feature extracted from the target image information in combination with a perception feature acquired based on a sensor other than a vision sensor.

4. The method for analyzing an impact property of a contaminant according to claim 1, wherein the determining a second physical property of the contaminated object comprises:
determining (321) the second physical property of the contaminated object based on image information of a region corresponding to the contaminated object in the target image information and/or environmental perception information acquired by another sensor;
and/or
determining (322) the second physical property of the contaminated object based on surface material information of a respective position in preset map information and current position information of a device acquiring the target image information.

5. The method for analyzing an impact property of a contaminant according to claim 1, wherein the determining (400) an impact property of the contaminant on the contaminated object based on the first physical property and the second physical property comprises:
inferring (410), by a pre-trained model based on the first physical property and the second physical property, a characteristic exhibited by interaction between the contaminant and the contaminated object to obtain the impact property, wherein the impact property comprises at least one of a diffusion property, an adhesion property, a flow property, a hazard property, a propagation property, and a cleaning constraint property.

6. The method for analyzing an impact property of a contaminant according to claim 5, wherein the cleaning constraint property comprises at least one of a cleaning priority constraint, a cleaning notification constraint, a cleaning approach constraint, a cleaning tool constraint, a cleaning mode constraint, a cleaning parameter constraint, and a cleaning path constraint.

7. The method for analyzing an impact property of a contaminant according to claim 1, wherein the target image information comprises at least one of visual information, depth information, and texture information.

8. A cleaning method, comprising:
obtaining (700) an impact property of a contaminant by using the method for analyzing an impact property of a contaminant according to any one of claims 1 to 7;
determining (800) a risk level of the contaminant by a pre-trained model based on the impact property, wherein the risk level comprises a contamination diffusion risk level and/or a hazard risk level; and
determining (900) a cleaning strategy for the contaminant based on the risk level and the impact property, and performing a cleaning operation according to the cleaning strategy.

9. An apparatus (1000) for analyzing an impact property of a contaminant, the apparatus (1000) comprising:
an acquisition module (1010), configured for acquiring target image information;
a contamination detection module (1020), configured for determining, based on the target image information, a contaminant and a contaminated object in contact with the contaminant;
a physical property determination module (1030), configured for determining a first physical property of the contaminant, and determining a second physical property of the contaminated object; and
an impact property analysis module (1040), configured for determining an impact property of the contaminant on the contaminated object based on the first physical property and the second physical property.

10. The apparatus (1000) for analyzing an impact property of a contaminant according to claim 9, wherein the contamination detection module (1020) determines, based on the target image information, the contaminant and a contaminated object in contact with the contaminant through:
extracting an image feature from the target image information;
performing, based on the image feature, detection of a to-be-determined contamination region on the target image information, to obtain at least one to-be-determined contamination region;
performing classification and identification on each to-be-determined contamination region, to obtain a to-be-determined contaminant category corresponding to the to-be-determined contamination region and a confidence score corresponding to the to-be-determined contaminant category; and
determining, based on the to-be-determined contaminant category and the confidence score, a to-be-determined contamination region satisfying a preset condition as the contaminant, and determining an object in contact with the contaminant as the contaminated object.

11. The apparatus (1000) for analyzing an impact property of a contaminant according to claim 9, wherein the physical property determination module (1030) determines the first physical property of the contaminant through:
determining the first physical property of the contaminant based on an image feature extracted from the target image information; or
determining the first physical property of the contaminant based on an image feature extracted from the target image information in combination with a perception feature acquired based on a sensor other than a vision sensor.

12. The apparatus (1000) for analyzing an impact property of a contaminant according to claim 9, wherein the physical property determination module (1030) determines the second physical property of the contaminated object through:
determining the second physical property of the contaminated object based on image information of a region corresponding to the contaminated object in the target image information and/or environmental perception information acquired by another sensor;
and/or
determining the second physical property of the contaminated object based on surface material information of a respective position in preset map information and current position information of a device acquiring the target image information.

13. The apparatus (1000) for analyzing an impact property of a contaminant according to claim 9, wherein the impact property analysis module (1040) determines the impact property of the contaminant on the contaminated object based on the first physical property and the second physical property through:
inferring, by a pre-trained model based on the first physical property and the second physical property, a characteristic exhibited by interaction between the contaminant and the contaminated object to obtain the impact property, wherein the impact property comprises at least one of a diffusion property, an adhesion property, a flow property, a hazard property, a propagation property, and a cleaning constraint property.

14. A computer readable storage medium, on which computer program instructions are stored, wherein the computer program instructions, when executed by a processor (1110), cause the processor (1110) to implement the method according to any one of claims 1 to 7.

15. A cleaning device (1100), comprising:
one or more processors (1110), and
a memory (1120), on which computer instructions are stored, wherein the computer instructions, when executed by the one or more processors (1110), cause the one or more processors (1110) to implement the method according to any one of claims 1 to 7.
